# EUROPÄISCHE PATENTSCHRIFT

(11) **EP 0 867 048 B1**
(45) Veröffentlichungstag und Bekanntmachung des Hinweises auf die Patenterteilung: **20.02.2002**
(21) Anmeldenummer: 96941024.0
(22) Anmeldetag: 26.11.1996
(51) Int. Cl.: H01M 8/10, H01M 4/86, H01M 4/96, H01M 4/88

(54) **GASDIFFUSIONSELEKTRODE FÜR POLYMERELEKTROLYTMEMBRAN-BRENNSTOFFZELLEN**
GAS DIFFUSION ELECTRODE FOR POLYMER ELECTROLYTE MEMBRANE FUEL CELLS
ELECTRODE DE DIFFUSION GAZEUSE POUR PILES A COMBUSTIBLE AVEC MEMBRANE EN ELECTROLITE POLYMERIQUE

(30) Priorität: 28.11.1995 DE 19544323
(43) Veröffentlichungstag der Anmeldung: 30.09.1998
(73) Patentinhaber: Celanese Ventures GmbH, 65926 Frankfurt am Main (DE); Magnet-Motor GmbH, 82304 Starnberg (DE)
(72) Erfinder: KOSCHANY, Arthur, D-82343 Pöcking (DE); SCHWESINGER, Thomas, D-94356 Kirchroth (DE); LUCAS, Christian, D-82152 Planegg (DE); FRANK, Georg, D-72074 Tübingen (DE); DECKERS, Gregor, D-65929 Frankfurt (DE); SOCZKA-GUTH, Thomas, D-65719 Hofheim (DE); BÖNSEL, Harald, D-65529 Waldems (DE); KNAUF, Rüdiger, D-65719 Hofheim (DE)
(86) Internationale Anmeldenummer: EP9605206
(87) Internationale Veröffentlichungsnummer: WO9720358

(56) Entgegenhaltungen:
- EP-A- 0 176 831
- EP-A- 0 298 690
- EP-A- 0 560 295
- EP-A- 0 577 291
- EP-A- 0 687 023
- FR-A- 1 542 346
- FR-A- 2 258 007
- GB-A- 2 000 363
- US-A- 4 804 592
- US-A- 5 399 184
- US-A- 5 521 020
- DATABASE WPI Section Ch, Week 9437 Derwent Publications Ltd., London, GB; Class A85, AN 94-297348 XP002027843 & JP 06 223 835 A (EQUOS RES KK) , 12.August 1994 & PATENT ABSTRACTS OF JAPAN vol. 18, no. 586 (E-1627), 9.November 1994 JP

## Beschreibung

Die Erfindung betrifft eine Gasdiffusionselektrode in einer Membran-Elektrodeneinheit sowie ein Verfahren zu deren Herstellung, ein und deren Verwendung für Brennstoff- und Elektrolysezellen.

In Polymerelektrolytmembran-Brennstoffzellen wird eine Gasdiffusionselektrode als Elektrode zwischen Polymerelektrolytmembran und Stromsammlern, z. B. bipolaren Platten, verwendet. Sie hat die Funktion, den in der Membrane erzeugten Strom abzuleiten und muß die Reaktionsgase zur katalytischen Schicht durchdiffundieren lassen. Außerdem sollte die Gasdiffusionselektrode zumindest in der der Membrane zugewandten Schicht wasserabweisend sein, um zu verhindern, daß bei der Reaktion gebildetes Wasser die Poren der Gasdiffusionselektrode flutet und damit den Gastransport zur katalytisch aktiven Schicht blockiert. Für viele Anwendungen, beispielsweise in der Raumfahrt und für die Anwendung in Automobilen, ist es zudem wichtig, daß die zum Aufbau der Zellstapel verwendeten Materialien leicht und platzsparend sind und dabei dennoch eine hohe mechanische Stabilität aufweisen. Stets von Interesse ist eine möglichst kostengünstige Herstellung der Materialien.

Bisher werden für derartige Gasdiffusionselektroden typischerweise Materialien aus graphitisiertem Gewebe oder graphitisierte Papiere, die über eine aufwendige Temperaturbehandlung (bis über 2000°C) hergestellt werden, verwendet (E-Tek, Inc. 1995 Catalogue, E-Tek, Inc. Natick, MA 01760, USA). Die Gasdiffusionselektroden aus graphitisiertem Gewebe lassen Sauerstoff, besonders den Luftsauerstoff unter niedrigem Druck, oft nicht ausreichend gut diffundieren und sind außerdem relativ schwer. Die dichte Struktur ist notwendig, um eine ausreichende mechanische Festigkeit und eine genügend hohe Leitfähigkeit des Gewebes senkrecht zur Faserrichtung zu erhalten. Bei ihrer Herstellung werden hohe Temperaturen und eine exakte Reaktionsführung benötigt, was zu einem entsprechend hohen Energieverbrauch und hohen Preisen führt.
Die graphitisierten Papiere besitzen den Nachteil, daß sie spröde und nicht flexibel sind und die Porenstruktur dieser Papiere festgelegt ist, und nicht ohne eine Beeinflussung der Leitfähigkeit verändert werden kann.

Ferner bekannt sind Gasdiffusionselektroden, die ein hydrophobes, poröses und für Brennstoffzellen ausreichend elektrisch leitfähiges Stützmaterial, eine nichtkatalytisch aktive Zwischenschicht, die ein elektronenleitendes Material enthält, und eine katalytisch aktive Schicht enthalten (EP-A-0 687 023). Die nichtkatalytisch aktive Zwischenschicht enthält hierbei eine Mischung aus einem elektronenleitenden und protonenleitenden lonomer. Mit den beschriebenen Gasdiffusionselektroden lassen sich bei einer Platinbeladung von 0,21 mg/cm², einem H₂-Duck von 1,25 bar (absolut) und einem Luftdruck von 1,8 bar (absolut) in einer Brennstoffzelle lediglich maximale Leistungen von 200 mW/cm² bzw. eine Leistung von 163 mW/cm² bei einer Zellspannung von 0,6V erreichen (Beispiel 2, Tabelle).

Aufgabe dieser Erfindung ist es, eine kostengünstig herstellbare aber mechanisch stabile Gasdiffusionselektrode in einer Membran-Elektrodeneinheit zur Verfügung zu stellen, die Sauerstoff, insbesondere aus der Luft unter geringem Überdruck, gut diffundieren läßt und die außerdem die erforderliche hohe elektrische Leitfähigkeit besitzt, mechanisch stabil und wasserabstoßend ist.

Aufgabe der Erfindung ist es außerdem, ein Verfahren zur Herstellung einer derartigen Gasdiffusionselektrode in einer Membran-Elektrodeneinheit anzugeben.

Aufgabe der Erfindung ist es auch, ein Verfahren zur Herstellung einer entstrechenden Membran-Elektrodeneinheit und die Verwendung der erfindungsgemäßen Gasdiffusionselektroden in Brennstoff- und Elektrolysezellen aufzuzeigen.

Diese Aufgaben werden gelöst durch die Membran-Elektrodeneinheit gemäß Anspruch 1, das Herstellungverfahren gemäß Anspruch 15 und die Verwendung der Membran-Elektrodeneinheit gemäß Anspruch 27. Vorteilhafte Weiterbildungen der Erfindung sind in den entsprechenden Unteransprüchen angegeben.

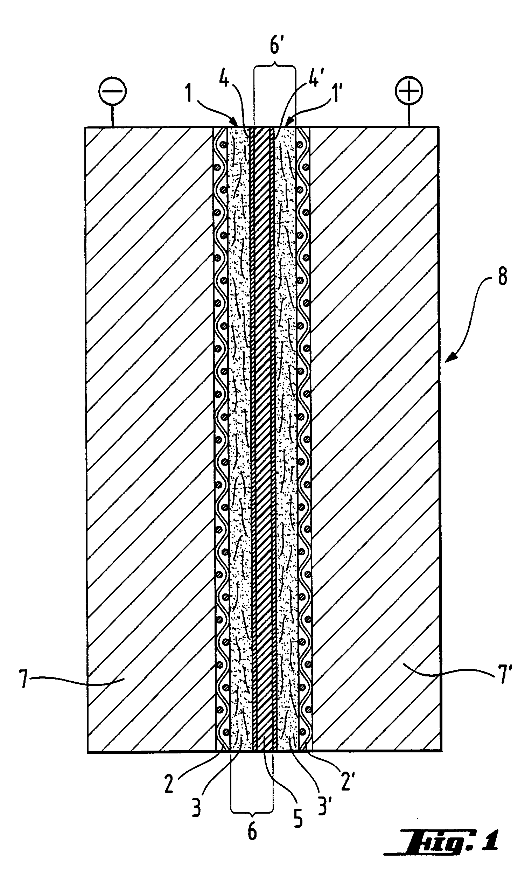

Abbildung 1 zeigt eine erfindungsgemäße Polymerelektrolytmembran-Brennstoffzelle.

Die Gasdiffusionselektroden in den Membran-Elektrodeneinheit gemäß der Erfindung eignen sich für Brennstoffzellen, insbesondere Polymerelektrolytmembran-Brennstoffzellen, und Polymerelektolytmembran-Elektrolysezellen. In Polymerelektrolyt-Brennstoffzellen können die Gasdiffusionselektroden sowohl als Anode als auch als Kathode verwendet werden. Mit besonderem Vorteil können die Gasdiffusionselektroden in Polymerelektrolyt-membran-Brennstoffzellen verwendet werden, die als Brenngas Wasserstoff und als Oxidationsmittel Luft verwenden und die bei niedrigem Druck von weniger als 0,5 bar über Umgebungsdruck, bevorzugt weniger als 0,1 bar über Umgebungsdruck betrieben werden.

Die Gasdiffusionselektrode enthält mindestens eine Gasdiffusionslage, die ein mechanisch stabiles Stützmaterial enthält, welches mit mindestens einem elektrisch leitfähigen Material mit einer Bulkleitfähigkeit ≥ 10 mS/cm imprägniert ist, d.h. daß die Poren (Zwischenräume zwischen den Fasern) des Stützmaterials im wesentlichen homogen mit dem elektrisch leitfähigem Material gefüllt sind.
In einer bevorzugten Ausführungsform enthält die Gasdiffusionselektrode ein bis vier Gasdiffusionslagen.

Als Ausgangsmaterial für die Gasdiffusionselektroden werden sehr leichte, nicht notwendigerweise elektrisch leitfähige aber mechanisch stabile Stützmaterialien, die Fasern z.B in Form von Vliesen, Papieren oder Geweben enthalten verwendet. Vorzugsweise enthält das Stützmaterial Kohlefasern, Glasfasern oder Fasern enthaltend organische Polymere, beispielsweise Polypropylen, Polyester (Polyethylentherephtalat), Polyphenylensulfid oder Polyetherketone, um nur einige zu nennen. Besonders gut geeignet sind dabei Materialien mit einem Flächengewicht < 150 g/m², vorzugsweise mit einem Flächengewicht im Bereich von 10 bis 100 g/ m². Bei Verwendung von Kohlenstoffmaterialien als Stützmaterialien eignen sich insbesondere Vliese aus carbonisierten Fasern mit Flächengewichten im bevorzugten Bereich. Die Verwendung solcher Materialien bieten zwei Vorteile: Erstens sind sie sehr leicht und zweitens haben sie eine hohe offene Porosität. Die offene Porosität der bevorzugt verwendeten Stützmaterialien liegt im Bereich von 20 bis 99,9%, bevorzugt 40 bis 99 % liegt, so daß sie sehr einfach mit anderen Materialien gefüllt werden können und somit die Porosität, Leitfähigkeit und die Hydrophobizität der fertigen Gasdiffusionslage durch die Füllmaterialien gezielt eingestellt werden kann und zwar über die gesamte Dicke der Gasdiffusionslage.

Zur Herstellung einer Gasdiffusionselektrode enthaltend mindestens eine leitfähige, hydrophobe und gasdurchlässige Gasdiffusionslage gemäß der Erfindung wird zunächst aus einem elektrisch leitfähiges Material, vorzugsweise in Pulverform, welches z.B Kohlenstoff (z.B. als Ruß) oder auch ein Metall enthält, das keine oder nur eine sehr geringe Löslichkeit in Wasser und eine geringe Oxidationsempfindlichkeit aufweist, wie z.B. Ti, Au, Pt, Pd, Ag, Ni und mindestens einer Flüssigkeit (z.B. Wasser oder niedrige (C₁-C₄-) Alkohole) eine Suspension hergestellt. Die elektrische Bulkleitfähigkeit der verwendeten elektrisch leitfähigen Materialien ist insbesondere ≥ 10 mS/cm², vorzugsweise ≥ 100 mS/cm². Die Partikelgröße liegt insbesondere im Bereich von 10 nm bis 0,1 mm bevorzugt im Berich von 50 nm bis 0,05 mm. Auch kann es sich als vorteilhaft erweisen, Mischungen von verschiedenen leitfähigen Pulvern oder Pulver von Legierungen aus leitfähigen Materialien wie z.B. Edelstahl, einzusetzen.

Zur Herabsetzung der Oberflächenspannung können Materialien (Zusätze oder Detergentien) wie z. B. niedere Alkohole beigegeben werden. Derartige Zusätze verbessern die Herstellbarkeit der Suspension, da sie eine bessere Benetzbarkeit des elektrisch leitfähigen Materials,z.B. des Rußes oder des Metallpulvers und damit eine bessere Mischbarkeit mit der Suspensionsflüssigkeit bewirken. Diese Suspension, gegebenenfalls auch mehrere solcher Suspensionen, wird intensiv gemischt mit mindestens einer Suspension oder Lösung aus einem Bindermaterial, z.B. temperaturstabile Polymere wie z.B. perfluorierte Polymere (fluorierte Ethylen-Propylen-Copolymere oder Polytetrafluorethylen), Polyetherketone, Polyethersulfone, Polysulfone, Polybenzimidazole, Polyphenylensulfide, Polyimid, Polyamid oder Polyphenylenoxide in mindestens einer Flüssigkeit, insbesondere Wasser, N-Methylpyrrolidon, Dimethylacetamid, Dimethylsulfoxid. Die inhärente Viskosität der Suspension (elektrisch leitfähiges Material, Bindermaterial und Lösemittel) liegt vorzugsweise im Bereich von 5-0,01 dl/g, insbesondere im Bereich von 2-0,05 dl/g.

In Abhängigkeit von der gewünschten Hydrophobizität der Gasdiffusionslage können auch mehrere der Binder gemischt eingesetzt werden, z.B. zusätzliche Verwendung von perfluorierten Polymeren in Verbindung mit einem nichtfluorierten Binder. Die Bindermaterialien und das elektrisch leitfähige Material werden dabei bevorzugt im Massenverhältnis 1:100 bis 100:1, besonders bevorzugt im Bereich von 1: 50 bis 50 : 1 eingesetzt.

Die vorstehend genannten Stützmaterialien werden mit der Suspensionsmischung durchdringend getränkt bzw. die Mischung wird auf das Stützmaterial gleichmäßig aufgetragen, so daß das Stützmaterial im wesentlichen homogen imprägniert wird. Anschließend wird der so hergestellte Gasdiffusionslagen-Grünling getrocknet, wobei sich die zur Trocknung erforderlichen Temperaturen nach der Art der verwendeten Flüssigkeiten und der verwendeten Stütz- und Bindematerialien richten. In der Regel ist das Trocknen bei höheren Temperaturen als Raumtemperatur vorteilhaft, z. B. bei Temperaturen oberhalb 80 °C, wobei die Trocknung entweder an der Luft oder unter Inertgas geschehen kann. Das Imprägnieren und Trocknen des Stützmaterials kann dabei ein- oder mehrmals wiederholt werden. Das so imprägnierte Stützmaterial wird schließlich bei einer Temperatur von mindestens 200 °C gesintert, um einen innigen Verbund des Stützmaterials mit dem elektrisch leitfähigen Material, aber auch des leitfähigen Materials in sich zu erhalten. Die Sinterung kann ebenfalls an der Luft oder unter Inertgas erfolgen. Je nach Stabilität der verwendeten Materialien wird bevorzugt bei Temperaturen oberhalb 300 °C gesintert. Das Verhältnis des Flächengewichts der fertigen Gasdiffusionslage zum eingesetzten Stützmaterial liegt im Bereich von 1,05 bis 50, bevorzugt im Bereich von 1,2 bis 20.

Die so erhaltene Gasdiffusionslage ist besonders homogen, porös und dennoch mechanisch sehr stabil. Dies wird durch die Trennung der Funktionen mechanische Stabilität durch die Stützmaterialien und der Funktion Leitfähigkeit durch die Imprägnierung mit den leitfähigen Materialien erreicht. Die Gasdiffusionslage weist aufgrund der einstellbaren Porosität eine geringere Diffusionshemmung gegenüber den benötigten Gasen, insbesondere dem Sauerstoff aus der Luft auf, als die üblicherweise graphitisierten Gewebe oder Papiere. Aufgrund des durch den Sinterschritt erzielten innigen Verbundes des Stützmaterials mit dem leitfähigen Materials ist auch die Leitfähigkeit der erfindungsgemäßen Gasdiffusionslage mit der von graphitisierten Geweben oder Papieren vergleichbar und ausreichend für die Anwendung in Brennstoffzellen oder Elektrolysezellen. Durch Zugabe eines Hydrophobierungsmittels (z.B. fluorierte Polymere, wie Polytetrafluorethylen oder fluorierte Ethylen-Propylen-Copolymere) in die Suspension mit dem leitfähigen Material kann eine sehr gleichmäßige Hydrophobierung über den Querschnitt der Gasdiffusionslage erreicht werden. Dies führt zu einem verbesserten Transport des Produktwassers in einer Brennstoffzelle aus der Gasdiffusionslage und somit der Gasdiffusionselektrode heraus und damit zu einer weiteren Verbesserung des Gastransportes insbesondere für den Sauerstoff aus der Luft.

Zur Herstellung der fertigen Gasdiffusionelektrode können nun eine oder mehrere Lagen, bevorzugt eine bis vier Lagen der beschriebenen Gasdiffusionslagen eingesetzt werden. Werden mehr als eine Lage verwendet, ist es zweckmäßig diese Schichten durch einen Preß- oder Laminierschritt bevorzugt bei höherer Temperatur miteinander innig zu verbinden.

Die wie vorstehend beschrieben hergestellte Gasdiffusionselektrode kann nun z.B. in einer Polymerelektrolytmembran-Brennstoffzelle eingesetzt werden. Da die oben beschriebene Elektrode keine katalytisch aktive Schicht enthält, kann sie einerseits in Verbindung mit einer katalysatorbeschichteten Membran verwendet werden. Alternativ kann jedoch auch die erfindungsgemäße Gasdiffusionselektrode mit einer katalytisch aktiven Schicht beschichtet werden.

Die katalytische Schicht muß gasdurchlässig sein, elektrische Leitfähigkeit, sowie H⁺-Ionenleitfähigkeit besitzen und selbstverständlich die gewünschten Reaktionen katalysieren. Diese Eigenschaften erhält man erfindungsgemäß, wenn man die katalytisch aktive Schicht sehr dünn gestaltet, vorzugsweise mit einer Dicke von 1 bis 100 µm, bevorzugt von 3 - 50 µm.

Diese Schicht enthält a.) mindestens ein katalytisch aktives Material, b.) eines oder mehrere ionenleitfähige Polymere, vorzugsweise ausgewählt aus der Gruppe der sulfonierten Polyaromaten (z.B. Polyetherketone, Polyethersulfone oder Polyphenylensulfide), Polybenzimidazole und der sulfonierten, perfluorierten Polymere, wie z.B. Nafion® (DuPont) oder Flemion® (Asahi Glass), und gegebenenfalls c.) eines oder mehrere hydrophobe Materialien, wie z.B. fluorierte Polymere, wie Polytetrafluorethylen, perfluorierte Ethylen-Propylen-Copolymere, teilfluorierte Polymere , wie Polytrifluorstyrol. Die ionenleitenden Polymere können in Form von Suspensionen oder Lösungen in geeigneten Lösemitteln verarbeitet werden.

Als katalytisch aktives Material werden Edelmetallkatalysatoren bevorzugt; insbesondere enthält das katalytisch aktive Material mindestens ein Metall der 8. Nebengruppe, z.B Platin. Ferner bevorzugt sind Legierungen eines oder mehrerer Metalle der 8. Nebengruppe, insbesondere mit Elementen der IV. Nebengruppe, wobei der Gehalt des Metalls der 8, Nebengruppe, z.B. Pt, in der Legierung im Bereich von 20 bis 95%, bevorzugt von 30 bis 90% liegt.

Die katalytisch aktiven Materialien (Katalysator) können geträgert oder ungeträgert eingesetzt werden. Wird ein geträgerter Katalysator verwendet, so liegt die Edelmetallbeladung auf dem Trägermaterial dabei oberhalb 1 Gew. %, bevorzugt oberhalb 2 Gew. %. Eine sehr günstige Edelmetallbeladung in der katalytisch aktiven Schicht ist kleiner 1 mg/cm², bevorzugt unter 0,5 mg/cm² und besonders bevorzugt unter 0,3 mg/cm² der Gasdiffusionselektrode. Das Masseverhältnis von katalytisch aktives Material : ionenleitendes Polymer liegt typischerweise im Bereich von 1: 100 bis 100 : 1, bevorzugt im Bereich von 1:10 bis 20:1.

Bei Verwendung von geträgerten Katalysatoren wird bevorzugt Kohlenstoff als Trägermaterial verwendet. Der Kohlenstoffträger des Katalysators ist dabei elektrisch leitfähig und porös, so daß eine ausreichende Leitfähigkeit und Gasdurchlässigkeit der katalytischen Schicht gewährleistet ist. Das protonenleitende Polymer dient gleichzeitig als Bindemittel für die Schicht. Die erfindungsgemäß geringe Schichtdicke garantiert kurze Transportwege und damit geringe Transportwiderstände für alle benötigten Stoffe: Elektronen, H⁺-Ionen und Gas.

Erfindungsgemäß wird eine Gasdiffusionselektrode folgendermaßen an einer Oberfläche mit einer katalytisch aktiven Schicht beschichtet: Ein katalytisch aktives Material, z. B. 20 % Pt auf 80 % Kohle (Ruß), wird mit einem oder mehreren gelösten oder suspendierten ionenleitenden Polymeren (Ionomer) intensiv gemischt. Die verwendbaren ionenleitenden Polymere sind oben bereits beispielhaft beschrieben worden. Als Suspensionsmittel eignen sich dabei besonders Wasser und Alkohole, insbesondere C₁-C₅-Alkohole, oder Mischungen hieraus. Die Suspension, die lonomer und Katalysator enthält, kann gegebenenfalls mit einer geeigneten Flüssigkeit, z. B. Wasser, verdünnt werden. Die Suspension enthaltend den Katalysator und das lonomer wird auf einer flächigen Seite der Gasdiffusionselektrode aufgebracht, z.B. durch Sprühen, Drucken, Pinseln und die aufgebrachte Schicht dann getrocknet. Meist ist es vorteilhaft, vor dem Aufbringen der Suspension einen Teil der Suspensionsmittelmischung, z. B. einen Teil der Alkohole, vorteilhafterweise bei leicht erhöhter Temperatur, zu verdunsten. Durch diesen Schritt kann die Oberflächenspannung der Suspension so eingestellt werden, daß die in der Suspension enthaltenen Katalysator- und lonomeranteile im wesentlichen nur die Oberfläche der Gasdiffusionslage benetzen, aber nicht in das Innere dieser Gasdiffusionslage eindringen. Um die Eindiffusion der katalytisch aktiven Schicht weiter zu minimieren, kann die Gasdiffusionslage zuvor auch mit einer Flüssigkeit, z.B. Wasser oder Alkohl getränkt werden, so daß dann die Poren gefüllt sind und eine Eindringen der Lösung verhindert wird.

Anschließend wird die so aufgebrachte Schicht getrocknet. Der Trocknungsschritt der aufgebrachten katalytisch aktiven Schicht wird üblicherweise bei Temperaturen von 10 °C bis 250 °C, bevorzugt 15 °C bis 200 °C und besonders bevorzugt bei 15 °C bis 150 °C durchgeführt. Dabei kann die Trocknung an Luft erfolgen, aber auch die Verwendung anderer Trocknungsmedien, z.B. Stickstoff oder Edelgase ist möglich.

Eine besonders gute Haftung der katalytisch aktiven Schicht erhält man, wenn man die Schritte des Aufbringens und Trocknens ein- oder mehrmals wiederholt. Die katalytisch aktive Schicht muß nicht notwendigerweise über ihre gesamte Fläche auf der Gasdiffusionslage eine homogene Schichtdicke aufweisen, vielmehr ist es manchmal sogar von Vorteil, wenn die Schichtdicke nicht überall gleich ist, da hierdurch die Rauhigkeit der Gesamtelektrode verkleinert werden kann. Die katalytisch aktive Schicht muß nicht notwendigerweise über ihre ganze Dicke homogen zusammengesetzt sein, vielmehr ist es meist günstiger, wenn ein Konzentrationsgradient an elektrisch leitendem und ionenleitendem Material senkrecht zu den aufeinanderfolgenden Schichten besteht. Besonders wenn man die katalytisch aktive Schicht in mehreren Schritten, wie oben beschrieben aufbringt, ist es durch Wahl unterschiedlicher, geeigneter Konzentrationen an katalytisch aktiven Material und ionenleitendem Polymer in der Suspension leicht möglich, Schichten zu erhalten, deren Konzentration an katalytisch aktiven Material senkrecht zur katalytischen Schicht mit zunehmender Entfernung vom Stützmaterial abnimmt und deren Konzentration an ionenleitendem Polymer zunimmt, d.h. die an der Grenzfläche zur Gasdiffusionslage reich an Katalysator und Elektronenleiter sind, an der freien Oberfläche der Elektrode, die später an die protonenleitende Membran angekoppelt wird jedoch reich an lonomer sind, wodurch die Ankopplung der Elektrode an die Membran optimiert wird.

Eine derartige Verteilung an Elektronenleiter, Katalysator und ionenleitendem Polymer ist weiterhin auch insofern von Vorteil, als sie der den notwendigen unterschiedlichen Konzentrationen an Elektronen und lonen in der katalytisch aktiven Schicht angepaßt ist. Betrachtet man beispielsweise die Anode, so wird das aus der Gasdiffusionsschicht in die katalytisch aktive Schicht übertretende Brenngas auf seinem Weg durch die katalytisch aktive Schicht hindurch in Richtung Polymerelektrolytmembran in zunehmendem Maße am Katalysator ionisiert, so daß die Konzentration an lonen und damit der Bedarf an ionenleitendem Material in membrannahen Bereichen der katalytisch aktiven Schicht höher ist als in den an das Kohlefaservlies angrenzenden Bereichen. Die Konzentration an Elektronen und damit der Bedarf an Elektronenleiter hingegen ist in den membrannahen Bereichen geringer, da nicht die Gesamtmenge der freiwerdenden Elektronen diese Bereiche passiert, sondern lediglich die bei der lonisierung des in dem jeweiligen Bereich noch vorhandenen neutralen Restgases freiwerdenden Elektronen. Analog wird in der katalytisch aktiven Schicht der Kathode das Oxidationsgas auf seinem Weg durch die katalytisch aktive Schicht durch Aufnahme von Elektronen in zunehmendem Ausmaß ionisiert, so daß auch hier die Konzentration an Ionen in membrannahen Bereichen höher und die Konzentration an Elektronen geringer ist als in membranabgewandten Bereichen.

Das Verfahren zur Beschichtung mit der katalytisch aktiven Schicht kann für jede beliebige nicht katalysierte Gasdiffusionselektrode, insbesondere für die erfindungsgemäße Gasdiffusionselektrode angewendet werden.

Die Gasdiffusionselektrode kann auf der zur katalytisch aktiven Schicht entgegengesetzten Seite durch ein elektrisch leitendes Gitternetz mechanisch verstärkt werden. Als Gitternetz eignen sich metallische Gitternetze, aber auch metallisch beschichtete Gitternetze aus Polymeren, wie Polyester, Polyetherketone, Polyethersulfone, Polysulfone oder anderen Polymeren, die Dauergebrauchstemperaturen oberhalb 100 °C aufweisen. Als Metalle für die Gitternetze oder die Beschichtung eignen sich Edelmetalle wie Pt, Au, Ag, Ni oder Edelstähle oder Kohlenstoff. Die Metallgitternetze können bei Verwendung einer Schutzbeschichtung mit Edelmetallen oder Nickel auch aus niederwertigeren Werkstoffe, wie Stahl hergestellt werden. Besonders geeignet im Sinne der Erfindung sind Quadratmaschengewebe mit einer Maschenweite von 0,4 bis 0,8 mm und einer Drahtstärke von 0,12 bis 0,28 mm, vorzugsweise aus Nickel. Nickel ist insofern ein günstiges Material, als es für die Verhältnisse in der Brennstoffzelle chemisch inert ist und einen genügend geringen Übergangswiderstand zur Gasdiffusionselektrode Das Gitternetz wird bei der Montage der Brennstoffzelle auf der der Membran abgewandten Seite der Gasdiffusionselektrode eingebaut. Seine Aufgaben sind es, eine ausreichende Stromableitung mit geringen Übergangswiderstand zur Gasdiffusionselektrode sicherzustellen, die Gase hinreichend gleichmäßig über die Fläche der Gasdiffusionselektrode zu verteilen und gleichzeitig die Elektrode gleichmäßig an die Membran anzupressen.

Bei Bedarf können eine oder mehrere Gasdiffusionslagen zu einer Gasdiffusionselektrode kombiniert werden. Durch die Verwendung von mehr als einer einzelnen der oben beschriebenen Gasdiffusionslagen übereinander wird z.B. die Gefahr verringert, daß sich das Gitternetz und/oder Teile der Stromsammler, z. B. der bipolaren Platten, bis zur Membran hin durchdrücken und diese beschädigen. Typischerweise werden insgesamt pro Elektrodenseite zwei bis drei imprägnierte Gasdiffusionslagen miteinander kombiniert. Die Verwendung von mehr als vier Gasdiffusionslagen übereinander kann zu einer nicht mehr ausreichenden Gasdiffusion führen, die sich in einem Leistungsabfall der Brennstoffzelle bemerkbar macht. Zur Erzielung einer guten Haftung der Gasdiffusionslagen aneinander kann die gewünschte Anzahl der Gasdiffusionslagen gepreßt werden, wobei Drücke bis zu 500 bar und Temperaturen bis 400 °C angewendet werden. Bevorzugte Bedingungen sind Drücke bis 200 bar und Temperaturen bis 200 °C. Das Beschichten einer Oberfläche einer derartigen Gasdiffusionslage mit Katalysator führt man am besten nach der Herstellung des innigen Verbundes der Einzellagen durch das Pressen durch.

Eine oder mehrere der Gasdiffusionselektroden können mit einer Polymerelektrolytmembran zu einer Membran-Elektrodeneinheit kombiniert werden. Als Polymerelektrolytmembran können beliebige Membranen eingesetzt werden. Beispiele für die diese Membranen sind z.B. Nafion® (DuPont), Flemion® , (Asahi Glass), Gore-Select® (W.L.Gore&Assoc.), oder Membranen, die beispielsweise in der folgenden Publikation beschrieben sind: "New Materials for Fuel Cell Systems 1", Proceeding of the Ist International Symposium on new materials for fuel cell systems, Montreal, Québec, Canada, July 9-13, 1995, Les Éditions de l'École Polytechnique de Montréal, S. 74-94. Insbesondere von Interesse sind hierbei Membranen ohne Fluor-Gehalt, da diese eine Reihe von Vorteilen aus Gründen den Umweltschutzes bieten. Für die optimale Herstellung einer Membran-Elektrodeneinheit sollte möglichst für die Herstellung der katalytisch aktiven Schicht als lonomer ein zur Membran passender Typ verwendet werden: Für die Ankopplung an eine nichtfluorierte Membran, z.B. aus suifoniertem Polyetherketon, sollte auch die katalytisch aktive Schicht als lonomer ein sulfonierten Polyarylen enthalten. Bei Verwendung einer perfluorierten Membran auch ein perfluoriertes lonomer in der aktiven Schicht. Aber auch andere Kombinationen zwischen lonomer in der katalytisch aktiven Schicht und in der Membran führen zu leistungsfähigen Membran-Elektroden-Einheiten. Je nach dem, ob die Gasdiffusionselektrode eine katalytisch aktive Schicht trägt oder nicht, kann eine Membran ohne oder mit katalytisch aktiver Schicht verwendet werden, wobei natürlich auch beide Teile eine katalytische Schicht an ihren Oberflächen tragen können, so daß dann der Verbund in der katalytischen Schicht hergestellt wird. Zur Herstellung einer Membran-Elektrodeneinheit wird eine Gasdiffusionselektrode, die aus einem oder mehreren imprägnierten Gasdiffusionslagen aufgebaut sein kann, an einer Seite einer in ihrer H⁺-Form vorliegenden Polymerelektrolytmembran angeordnet und anschließend bei Drücken bis zu 500 bar und Temperaturen bis zu 250 °C aufgepreßt. Bevorzugte Bedingungen sind Drücke bis 300 bar und Temperaturen bis 200 °C. Enthält die Gasdiffusionselektrode die katalytisch aktive Schicht , wird sie dergestalt auf die Membran aufgepreßt , daß die katalytisch aktive Schicht in Kontakt mit der Membran steht. Der Kontakt der Elektroden auf beiden Seiten der Membran mit der Membran kann auf diese Weise hergestellt werden. Die Elektroden können wahlweise nacheinander oder gleichzeitig in Kontakt mit der Membran gebracht werden.

Zur Herstellung der Membran-Elektrodeneinheiten können die katalytisch aktiven Schichten zwischen den Gasdiffusionslagen und der Membran identisch aufgebaut sein, oder auch unterschiedliche Zusammensetzngen aufweisen. Bei Verwendung von reinem Wasserstoff (Reinheit > 99,9%) kann der Katalysatorgehalt auf der Anodenseite deutlich geringer gewählt werden, als auf der Kathodenseite. Die Wahl unterschiedlicher katalytisch aktiver Schichten ist insbesondere dann von Interesse, wenn die Brennstoffzelle mit Brennstoffen arbeitet, die nicht reiner Wasserstoff sind. Dann empfiehlt es sich auf der Anode Katalysatoren zu verwenden, die z.B. eine erhöhte CO-Toleranz aufweisen, wie Katalysatoren, die Legierungen von Pt mit Ru enthalten. Auch in diesem Fall ist es sinnvoll, für Anode und Kathode unterschiedliche Katalysatorgehalte einzustellen. Durch den obengenannten Schritt der Herstellung eines innigen Verbundes wird der elektrische Kontakt zwischen der katalytisch aktiven Schicht auf der Membran und der Gasdiffusionslage bzw. zwischen der katalytisch aktiven Schicht auf der Gasdiffusionslage und der Membran gegenüber einem losen Zusammenspannen deutlich verbessert, so daß die Leistungsfähigkeit der Membran-Elektroden-Einheit in der Brennstoffzelle erhöht wird. Vor dem Einbau der Membran-Elektrodeneinheit in eine Polymerelektrolytmembran-Brennstoffzelle können die Gasdiffusionselektroden auf der der Membran abgewandten Seite durch Beilegung eines Gitternetzes verstärkt werden.

Die erfindungsgemäße Gasdiffusionselektrode besitzt im Vergleich zu den bekannten Gasdiffusionselektroden besonders niedrige elektrische Flächenwiderstände, die im Bereich von ≤ 100 mΩ/cm², vorzugsweise ≤ 60 mΩ/cm² liegen.

Eine besonders bevorzugte Ausführungsform einer Brennstoffzelle mit erfindungsgemäßer Gasdiffusionselektrode ist in Abbildung 1 gezeigt. Anode 1 und Kathode 1' werden von den imprägnierten Kohlefaservliesen 3 und 3' gebildet. Anode 1 und Kathode 1' tragen an ihren der Polymerelektrolytmembran 5 zugewandten Seiten jeweils eine Katalysatorschicht 4 bzw. 4'. Anode 1 und Kathode 1' bilden zusammen mit der Polymerelektrolytmembran 5 die Membran-Elektrodeneinheit 6 bzw. 6'. An ihren von der Membran abgewandten Seiten sind Anode 1 und Kathode 1' durch leitende Gitternetze 2 bzw. 2' verstärkt. Die bipolaren Platten 7 und 7' begrenzen die Zelle anoden- bzw. kathodenseitig.

Die erfindugsgemäßen Membran-Elektroden-Einheiten (MEA), sind unter allen Betriebsbedingungen bei Brennstoffzellen geeignet, d.h. sie können mit und ohne Überdruck, bei hoher und niedriger Gasüberströmung und bei Temperaturen bis 100°C eingesetzt werden. Typische Leistungsdichte im Betrieb mit Wasserstoff und Luft liegen je nach Betriebsbedingungen bei bis zu 900 mW/cm², im Betrieb mit Wasserstoff und Sauerstoff sogar bei bis zu 1,8 W/cm².

### Beispiele für die Herstellung und die Eigenschaften der Gasdiffusionselektrode:

### Beispiel 1:

45 g Ruß (Vulcan XC 72® ) werden in 450 ml Wasser und 495 ml Isopropanol suspendiert. Diese Suspension wird intensiv gemischt mit 32,17 g einer Polytetrafluorethylen(PTFE)-Suspension (60 % Hostaflon® -Fasern in wäßriger Suspension, Hersteller Hoechst AG, Produkt-Nummer TF5032). Mit der resultierenden Mischung wird ein carbonisiertes Kohlefaservlies (30 mg/m²) gleichmäßig bestrichen und das Vlies anschließend bei ca. 70 °C getrocknet. Das Bestreichen und Trocknen wird zweimal wiederholt. Nach dem letzten Trocknen wird das imprägnierte Kohlefaservlies ca. 15 Minuten lang bei 400 °C gesintert. Man erhält ein über die gesamte Dicke und die gesamte Fläche nahezu gleichmäßig mit Vulcan XC 72 und Hostaflon imprägniertes Kohlefaservlies.

### Beschichtung der Gasdiffusionselektrode mit einer katalytisch aktiven Schicht:

0,6 g Edelmetallkatalysator auf Kohlenstoffträger (20 % Pt, 80 % C) werden mit 4,0 g einer 5 %igen Nafion® -Lösung (Nafion gelöst in niederen aliphatischen Alkoholen und Wasser) und 10,0 g Wasser intensiv gemischt. Danach werden 2 g der enthaltenen Alkohole bei 50 °C abgedampft, um die Oberflächenspannung der Suspension zu erhöhen. Die Suspension wird nun auf ein imprägniertes Kohlefaservlies aufgesprüht und anschließend bei 80 °C getrocknet. Das Aufsprühen und Trocknen wird zweimal wiederholt. Es resultiert eine mit Katalysator beschichtete Gasdiffusionselektrode mit einer Pt-Belegung von ca. 0,2 mg/cm².

### Herstellung einer MEA mit einer NAFION 115® -Membran:

Die Membran-Elektroden-Einheit (MEA) mit einer Nafion 115® -Membran in der H⁺-Form, die aber nicht vorkonditioniert wird, wird durch Aufbau eines Sandwiches bestehend aus einer oben beschriebenen Elektrode, der Membran und einer weiteren der oben beschriebenen Elektrode hergestellt. Das Sandwich wird dann bei einer Temperatur von 130 °C für 90 Sekunden bei 250 bar verpreßt und so ein inniger Verbund erzeugt (MEA).

### Ergebnisse der MEA in einer Brennstoffzelle:

Die so hergestellte MEA wurde dann in einer Testzelle auf ihre Leistungsfähigkeit untersucht. Die Brennstoffzelle wurde dabei unter folgenden Bedingungen betrieben: H₂-Überdruck 0,5 bar, nicht befeuchtet, Luftüberdruck ca. 60 mbar, Luftzahl 16, die Luft wird befeuchtet. Die Temperatur der Zelle war 65 °C. Als Stromableiter werden Ni-Netze verwendet. Nach einer Einlaufzeit der MEA, in der sich die Membran mit der für eine hohe Leitfähigkeit notwendigen Menge Wasser versieht, erhält man folgende Leistungskenndaten:

| Spannung (mV) | Stromdichte (mA/cm²) | Leistungsdichte (mW/cm²) |
|---|---|---|
| 1002 | 0 | 0 |
| 750 | 208 | 151 |
| 700 | 300 | 210 |
| 600 | 563 | 338 |
| 500 | 700 | 350 |

### Beispiel 2:

Herstellung einer Gasdiffusionsschicht wie in Beispiel 1, aber Verwendung einer Membran aus sulfoniertem Polyetheretherketonketon (PEEKK) mit einer Dicke von 40 µm (gemessen im trockenen Zustand) und einem lonenaustauschäquivalent von 1,46 mmol H⁺/g. Die Membran wurde nach der Herstellung für 2 h in entionisiertem Wasser gekocht und anschließend unter Umgebungsbedingungen wieder getrocknet, so daß die Membran während des Einbaus weitgehend trocken war. Die Elektroden aus Beispiel 1 wurden auf beiden Seiten der Membran aufgelegt und anschließend bei Raumtemperatur zu einer MEA verpreßt.

Die MEA wurde in die Testzelle eingebaut und unter folgenden Testbedingungen betrieben: Zelltemperatur 80 °C, H₂-Überdruck < 100 bar, Befeuchtung bei 80 °C, Überströmung 2, Luftüberdruck < 100 mbar, Luftzahl 5,5, Befeuchtung bei 80 °C

Dabei konnten folgende Leistungskenndaten erzielt werden:

| Spannung (mV) | Stromdichte (mA/cm²) | Leistungsdichte (mW/cm²) |
|---|---|---|
| 980 | 0 | 0 |
| 750 | 132 | 99 |
| 700 | 240 | 168 |
| 600 | 520 | 312 |
| 500 | 710 | 355 |

### Beispiel 3 (Vergleichsbeispiel):

4 Lagen der nach Beispiel 1 bzw. 2 hergestellten Gasdiffusionsschicht werden als kreisförmige Gebilde mit einer Fläche von 12 cm² in einen Zellblock einer Brennstoffzelle eingebaut. Die Gasdiffusionslagen wurden dann mit einem Strom von 1 A/cm² belastet und der Spannungsabfall über dem Zellblock gemessen. Der Flächenwiderstand der Gasdiffusionsschichten einschließlich der Übergangswiderstände zum Zellblock liegt bei einem Anpreßdruck von ca. 10 bar bei 40 mΩ/ cm².

Dieses Experiment wurde unter identischen Bedingungen mit den als Ausgangsmaterial verwendeten, nicht modifizierten Kohlefaservliesen wiederholt. Der Widerstand der unbehandelten Kohlefaservlieslagen war mit 330 mΩ/ cm² ca. 8 mal größer als der Widerstand der erfindungsgemäß hergestellten Gasdiffusionslagen.

### Beispiel 4:

Verwendung eines Glasfaservlieses mit einem Flächengewicht von 30 g/m², wobei die einzelnen Glasfasern einen Durchmesser von 12 µm haben, als mechanische Stabilisierung für die Gasdiffusionselektrode. Der Flächenwiderstand der Glasfaservliese ist größer als 100 kΩ/ cm². Zur Herstellung einer Elektrode wurden zwei Gasdiffusionslagen mit Glasfaservlies verwendet.
Die Herstellung der einzelnen Gasdiffusionslagen geschieht analog zu Beispiel 1, d.h. das Glasfaservlies wird mit einer Suspension aus Ruß/PTFE über seine gesamte Dicke möglichst homogen imprägniert, getrocknet und dann gesintert. Die verwendete Rezeptur für die Suspension und die Behandlungsschritte sind analog zu Beispiel 1. Die fertigen Gasdiffusionselektroden werden dann einseitig mit einer katalytisch aktiven Schicht, ebenfalls analog zu Beispiel 1, versehen. Der Platingehalt der katalytisch aktiven Schicht liegt bei 0,2 mg/cm².
Der Flächenwiderstand der Gasdiffusionselektroden lag bei 80 mΩ/ cm², d.h. mehr als 10⁶ mal kleiner als der Widerstand der Glasfasern alleine!
Zur Herstellung einer MEA wurden zwei so hergestellte Glasfaserelektroden mit einer Gore Select® -Membran (40 µm) (Fa. W. L. Gore & Assoc.) bei 90 °C und 80 bar zu einer MEA verpreßt.
Die MEA wurde nun unter Bedingungen aus Beispiel 1 auf ihre Leistungsfähigkeit untersucht. Dabei ergaben sich folgende Kenndaten:

| Spannung (mV) | Stromdichte (mA/cm²) | Leistungsdichte (mW/cm²) |
|---|---|---|
| 980 | 0 | 0 |
| 750 | 263 | 196 |
| 700 | 371 | 260 |
| 650 | 500 | 325 |
| 550 | 750 | 412 |

### Beispiel 5:

Herstellung der MEA analog zu Beispiel 2, allerdings beträgt die Dicke der verwendeten Membran in diesem Fall nur 25 µm. Diese MEA wurde unter folgenden Bedingungen untersucht:
Zelltemperatur: 50 °C, Verwendung von Wasserstoff und Sauerstoff bei 3 bar absolutem Druck und einer Überströmung um 2. Die Befeuchter für H₂ und O₂ wurden bei Umgebungstempertur, d.h. 22 °C betrieben, so daß die Gase nur zu etwa 30% mit Wasserdampf gesättigt waren. Dabei ergaben sich folgende Kenndaten:

| Spannung (mV) | Stromdichte (mA/cm²) | Leistungsdichte (mW/cm²) |
|---|---|---|
| 980 | 0 | 0 |
| 750 | 374 | 281 |
| 700 | 580 | 406 |
| 600 | 1000 | 600 |
| 500 | 1395 | 697 |

Dabei ließ sich z.B. die gefundene Leistung bei 700 mV über mehrere Stunden hinweg bei der geringen Befeuchtung aufrechterhalten.

## Patentansprüche

1. Membran-Elektrodeneinheit enthaltend mindestens eine Polymerelektrolytmembran und mindestens eine Gasdiffusionselektrode, die mindestens eine katalytisch aktive Schicht aufweist und mindestens eine elektrisch leitfähige, hydrophobe und gasdurchlässige Gasdiffusionslage, wobei die Gasdiffusionslage ein mechanisch stabiles Stützmaterial enthält, das mit mindestens einem elektrisch leitfähigen Material mit einer Bulkleitfähigkeit ≥10mS/cm imprägniert ist, das mechanisch stabile Stützmaterial ein Flächengewicht von < 150 g/m² aufweist **und Glasfasern, carbonisierte Fasern oder Fasern enthaltend organische Polymere enthält** und die Gasdiffusionselektrode einen elektrischen Flächenwiderstand von ≤100 mΩ x cm² besitzt.

2. Membran-Elektrodeneinheit nach Anspruch 1, **dadurch gekennzeichnet, daß** die Gasdiffusionselektrode mindestens eine Gasdiffusionslage enthält, bei der das mechanisch stabile Stützmaterial ein Vlies, Gewebe oder Papier ist.

3. Membran-Elektrodeneinheit nach Anspruch 2, **dadurch gekennzeichnet, daß** das mechanisch stabile Stützmaterial **Fasern aus Polypropylen, Polyester, Polyphenylensulfid oder Polyetherketon enthält.**

4. Membran-Elektrodeneinheit nach mindestens einem der Ansprüche 1 bis 3, **dadurch gekennzeichnet, daß** das mechanisch stabile Stützmaterial eine offene Porosität im Bereich von 20 bis 99,9% aufweist.

5. Membran-Elektrodeneinheit nach mindestens einem der Ansprüche 1 bis 4, **dadurch gekennzeichnet, daß** das elektrisch leitfähige Material Kohlenstoff und/oder ein Metall enthält.

6. Membran-Elektrodeneinheit nach mindestens einem der Ansprüche 1 bis 5 **dadurch gekennzeichnet, daß** die Gasdiffusionselektrode ein bis vier Gasdiffusionslagen enthält.

7. Membran-Elektrodeneinheit nach mindestens einem der Ansprüche 1 bis 6 **dadurch gekennzeichnet, daß** die Gasdiffusionslage ein mechanisch stabiles Stützmaterial enthält, das mit einem Bindermaterial imprägniert ist, vorzugsweise mit einem temperaturstabilen Polymeren.

8. Membran-Elektrodeneinheit nach Anspruch 1, **dadurch gekennzeichnet, daß** die katalytisch aktive Schicht
a.) mindestens ein katalytisch aktives Material und
b.) eines oder mehrere ionenleitende Polymere und/oder
c.) eines oder mehrere hydrophobe Materialien enthält,

9. Membran-Elektrodeneinheit nach Anspruch 8, **dadurch gekennzeichnet daß** das katalytisch aktive Material mindestens ein Metall der 8. Nebengruppe oder eine Legierung eines oder mehrerer Metalle der 8. Nebengruppe, insbesondere mit einem Metall der 4. Nebengruppe ist.

10. Membran-Elektrodeneinheit nach Anspruch 8 und/oder 9, **dadurch gekennzeichnet, daß** das Masseverhältnis katalytisch aktives Material : ionenleitendes Polymer im Bereich von1: 100 bis 100: 1 liegt.

11. Membran-Elektrodeneinheit nach mindestens einem der Ansprüche 8 bis 10, **dadurch gekennzeichnet, daß** die Konzentration an katalytisch aktivem Material senkrecht zur katalytischen Schicht mit zunehmender Entfernung vom Stützmaterial abnimmt und die Konzentration an ionenleitendem Polymer zunimmt.

12. Membran-Elektrodeneinheit nach mindestens einem der Ansprüche 1 bis 11, **dadurch gekennzeichnet, daß** die Gasdiffusionselektrode durch ein elektrisch leitendes Gitternetz mechanisch verstärkt ist.

13. Membran-Eiektrodeneinheit nach Anspruch 12, **dadurch gekennzeichnet, daß** das elektrisch leitende Gitternetz ein metallisches Gitternetz ist oder ein metallisch beschichtetes Polymer enthält.

14. Membran-Elektrodeneinheit nach mindestens einem der Ansprüche 1 bis 13, **dadurch gekennzeichnet, daß** diese eine Anode, eine Kathode und eine zwischen Anode und Kathode angeordnete Polymerelektrolytmembran enthält.

15. Verfahren zur Herstellung einer Membran-Elektrodeneinheit enthaltend eine Polymerelektrolytmembran und mindestens eine Gasdiffusionselektrode nach Anspruch 1, **dadurch gekennzeichnet, daß** das Verfahren die folgenden Schritte aufweist:
a) Herstellen einer Suspension enthaltend ein elektrisch leitfähiges Material und mindestens eine Flüssigkeit,
b) Bereitstellen einer oder mehrerer Suspensionen oder Lösungen aus einem Bindermaterial und mindestens einer Flüssigkeit,
c) intensives Mischen der in Schritt a) hergestellten Suspension mit mindestens einer der in Schritt b) hergestellten Suspensionen,
d) Imprägnieren eines mechanisch stabilen Stützmaterials nach Anspruch 1 mit der in Schritt c) hergestellten Mischung,
e) Trocknen des imprägnierten Stützmaterials, Sintern des imprägnierten Stützmaterials bei einer Temperatur von mindestens 200°C,
g) Kombination der Gasdiffusionslage mit einer katalytisch aktiven Schicht und
h) Kombination der Gasdiffusionselektrode mit einer Polymerelektrolytmembran, wobei das mechanisch stabile Stützmaterial ein Flächengewicht von < 150 g/m² aufweist und die Gasdiffusionselektrode einen elektrischen Flächenwiderstand von ≤100 mΩ x cm² besitzt.

16. Verfahren zur Herstellung einer Membran-Elektrodeneinheit nach Anspruch 15, **dadurch gekennzeichnet, daß** das elektrisch leitfähige Material eine elektrische Bulkleitfähigkeit ≥10mS/cm aufweist.

17. Verfahren zur Herstellung einer Membran-Elektrodeneinheit nach mindestens einem der Ansprüche 15 oder 16, **dadurch gekennzeichnet, daß** die Gasdiffusionselektrode mindestens eine Gasdiffusionslage enthält, bei der das mechanisch stabile Stützmaterial ein Vlies, Gewebe oder Papier ist.

18. Verfahren zur Herstellung einer Membran-Elektrodeneinheit nach mindestens einem der Ansprüche 15 bis 17, **dadurch gekennzeichnet, daß** die Schritte d) und e) ein- oder mehrmals wiederholt werden.

19. Verfahren zur Herstellung einer Membran-Elektrodeneinheit nach mindestens einem der Ansprüche 15 bis 18, **dadurch gekennzeichnet, daß** das imprägnierte Stützmaterial bei Temperaturen oberhalb von 300°C gesintert wird.

20. Verfahren zur Herstellung einer Membran-Elektrodeneinheit nach mindestens einem der Ansprüche 15 bis 19, **dadurch gekennzeichnet, daß** eine oder mehrere gesinterte Gasdiffusionslagen bei einem Druck von bis zu 500 bar und einer Temperatur von bis zu 400°C, vorzugsweise von bis zu 250°C gepreßt werden.

21. Verfahren zur Herstellung einer Membran-Elektrodeneinheit nach mindestens einem der Ansprüche 15 bis 20, **dadurch gekennzeichnet, daß** die in Schritt a.) hergestellte Suspension ein Material zur Herabsetzung der Oberflächenspannung enthält.

22. Verfahren zur Herstellung einer Membran-Elektrodeneinheit nach mindestens einem der Ansprüche 15 bis 21, **dadurch gekennzeichnet, daß** das Bindermaterial und das elektrisch leitfähige Material in einem Massenverhältnis von 1 - 100 bis 100: 1 eingesetzt werden.

23. Verfahren zur Herstellung einer Membran-Elektrodeneinheit nach mindestens einem der Ansprüche 15 bis 22, **dadurch gekennzeichnet, daß** die Beschichtung der Gasdiffusionslage mit einer katalytisch aktiven Schicht folgende Schritte aufweist:
a) intensives Mischen mindestens eines katalytisch aktiven Materials mit einem oder mehreren gelösten oder suspendierten ionenleitenden Polymeren,
b) Aufbringen der in Schritt a) hergestellten Suspension auf eine Oberfläche der Gasdiffusionslage,
c) Trocknen der aufgebrachten Schicht.

24. Verfahren zur Herstellung einer Membran-Elektrodeneinheit nach Anspruch 23, **dadurch gekennzeichnet, daß** vor dem Aufbringen der in Schritt a) hergestellten Suspension ein Teil der Suspensionsflüssigkeit verdunstet wird.

25. Verfahren zur Herstellung einer Membran-Elektrodeneinheit nach mindestens einem der Ansprüche 23 bis 24, **dadurch gekennzeichnet, daß** die Schritte b) und c) ein- oder mehrmals wiederholt werden.

26. Verfahren zur Herstellung einer Membran-Elektrodeneinheit nach mindestens einem der Ansprüche 23 bis 25, **dadurch gekennzeichnet, daß** Suspensionen unterschiedlicher Konzentration an katalytisch aktivem Material und ionenleitendem Polymer in aufeinanderfolgenden Schichten verwendet werden.

27. Verwendung einer Membran-Elektrodeneinheit nach einem der Ansprüche 1 bis 14 in einer Polymerelektrolyt-Brennstoff- oder -Elektrolysezelle.

## Claims

1. Membrane electrode unit containing at least one polymer electrolyte membrane and at least one gas diffusion electrode which has at least one catalytically active layer and at least one electrically conductive, hydrophobic and gas-permeable gas diffusion layer, where the gas diffusion layer contains a mechanically stable supporting material which has been impregnated with at least one electrically conductive material having a bulk conductivity of ≥ 10 mS/cm, the mechanically stable supporting material has a weight per unit area of < 150 g/m² and contains glass fibers, carbonized fibers or fibers containing organic polymers, and the gas diffusion electrode has an electrical surface resistance of ≤ 100 mΩ × cm².

2. Membrane electrode unit according to Claim 1, **characterized in that** the gas diffusion electrode contains at least one gas diffusion layer in which the mechanically stable supporting material is a nonwoven fabric, a woven fabric or paper.

3. Membrane electrode unit according to Claim 2, **characterized in that** the mechanically stable supporting material contains fibers made from polypropylene, polyester, polyphenylene sulfide or polyether ketone.

4. Membrane electrode unit according to at least one of Claims 1 to 3, **characterized in that** the mechanically stable supporting material has an open porosity in the range from 20 to 99.9%.

5. Membrane electrode unit according to at least one of Claims 1 to 4, **characterized in that** the electrically conductive material comprises carbon and/or a metal.

6. Membrane electrode unit according to at least one of Claims 1 to 5, **characterized in that** the gas diffusion electrode contains from one to four gas diffusion layers.

7. Membrane electrode unit according to at least one of Claims 1 to 6, **characterized in that** the gas diffusion layer contains a mechanically stable supporting material which has been impregnated with a binder material, preferably with a heat-stable polymer.

8. Membrane electrode unit according to Claim 1, **characterized in that** the catalytically active layer contains
a.) at least one catalytically active material and
b.) one or more ion-conducting polymers and/or
c.) one or more hydrophobic materials.

9. Membrane electrode unit according to Claim 8, **characterized in that** the catalytically active material is at least one metal from sub-group 8 or an alloy of one or more metals from sub-group 8, in particular with a metal from sub-group 4.

10. Membrane electrode unit according to Claim 8 and/or 9, **characterized in that** the catalytically active material : ion-conducting polymer weight ratio is in the range from 1 : 100 to 100 : 1.

11. Membrane electrode unit according to at least one of Claims 8 to 10, **characterized in that** the concentration of catalytically active material decreases perpendicularly to the catalyst layer with increasing separation from the supporting material and the concentration of ion-conducting polymer increases.

12. Membrane electrode unit according to at least one of Claims 1 to 11, **characterized in that** the gas diffusion electrode has been mechanically reinforced by an electrically conductive mesh.

13. Membrane electrode unit according to Claim 12, **characterized in that** the electrically conductive mesh is a metallic mesh or contains a metal-coated polymer.

14. Membrane electrode unit according to at least one of Claims 1 to 13, **characterized in that** this contains an anode, a cathode and a polymer electrolyte membrane arranged between the anode and cathode.

15. Process for the production of a membrane electrode unit containing a polymer electrolyte membrane and at least one gas diffusion electrode according to Claim 1, **characterized in that** the process comprises the following steps:
a) preparation of a suspension containing an electrically conductive material and at least one liquid,
b) preparation of one or more suspensions or solutions comprising a binder material and at least one liquid,
c) intensive mixing of the suspension prepared in step a) with at least one of the suspensions prepared in step b),
d) impregnation of a mechanically stable supporting material according to Claim 1 with the mixture prepared in step c),
e) drying of the impregnated supporting material, sintering of the impregnated supporting material at a temperature of at least 200°C,
g) combination of the gas diffusion layer with a catalytically active layer, and
h) combination of the gas diffusion electrode with a polymer electrolyte membrane, where the mechanically stable supporting material has a weight per unit area of < 150 g/m², and the gas diffusion electrode has an electrical surface resistance of ≤ 100 mΩ × cm².

16. Process for the production of a membrane electrode unit according to Claim 15, **characterized in that** the electrically conductive material has an electrical bulk conductivity of ≥ 10 mS/cm.

17. Process for the production of a membrane electrode unit according to at least one of Claims 15 and 16, **characterized in that** the gas diffusion electrode contains at least one gas diffusion layer in which the mechanically stable supporting material is a nonwoven fabric, woven fabric or paper.

18. Process for the production of a membrane electrode unit according to at least one of Claims 15 to 17, **characterized in that** steps d) and e) are repeated one or more times.

19. Process for the production of a membrane electrode unit according to at least one of Claims 15 to 18, **characterized in that** the impregnated supporting material is sintered at temperatures above 300°C.

20. Process for the production of a membrane electrode unit according to at least one of Claims 15 to 19, **characterized in that** one or more sintered gas diffusion layers are pressed at a pressure of up to 500 bar and a temperature of up to 400°C, preferably of up to 250°C.

21. Process for the production of a membrane electrode unit according to at least one of Claims 15 to 20, **characterized in that** the suspension prepared in step a.) contains a material for reducing the surface tension.

22. Process for the production of a membrane electrode unit according to at least one of Claims 15 to 21, **characterized in that** the binder material and the electrically conductive material are employed in a weight ratio of from 1 : 100 to 100: 1.

23. Process for the production of a membrane electrode unit according to at least one of Claims 15 to 22, **characterized in that** the coating of the gas diffusion layer with a catalytically active layer comprises the following steps:
a) intensive mixing of at least one catalytically active material with one or more dissolved or suspended ion-conducting polymers,
b) application of the suspension prepared in step a) to a surface of the gas diffusion layer,
c) drying of the applied layer.

24. Process for the production of a membrane electrode unit according to Claim 23, **characterized in that** some of the suspension liquid is evaporated before application of the suspension prepared in step a).

25. Process for the production of a membrane electrode unit according to at least one of Claims 23 and 24, **characterized in that** steps b) and c) are repeated one or more times.

26. Process for the production of a membrane electrode unit according to at least one of Claims 23 to 25, **characterized in that** suspensions of different concentrations of catalytically active material and ion-conducting polymer are used in successive layers.

27. Use of a membrane electrode unit according to one of Claims 1 to 14 in a polymer electrolyte fuel cell or electrolysis cell.

## Revendications

1. Unité membrane-électrodes comprenant au moins une membrane électrolyte polymère et au moins une électrode de diffusion gazeuse qui présente au moins une couche catalytique active et au moins une couche de diffusion gazeuse conductrice d'électricité, hydrophobe et perméable au gaz , la couche de diffusion gazeuse comprenant un matériau de support mécanique stable, imprégné au moins d'un matériau conducteur d'électricité d'une conductibilité en vrac de ≥ 10 ms/cm, le matériau de support mécanique stable présentant une masse surfacique de < 150 g/m² et contenant des fibres de verre, des fibres carbonisées ou des fibres qui contiennent des polymères organiques et l'électrode de diffusion gazeuse possédant une résistance superficielle électrique de ≤ 100 Ω x cm².

2. Unité membrane-électrodes selon la revendication 1, **caractérisée en ce que** l'électrode de diffusion gazeuse comprend au moins une couche de diffusion gazeuse dont le matériau de support mécanique stable est un nontissé, du tissu ou du papier.

3. Unité membrane-électrodes selon la revendication 2, **caractérisée en ce que** le matériau de support mécanique stable comprend des fibres en polypropylène, en polyester, en polysulfure de phénylène ou en polyéthercétone.

4. Unité membrane-électrodes selon au moins une des revendications 1 à 3, **caractérisée en ce que** le matériau de support mécanique stable présente une porosité ouverte allant de 20 à 99,9 %.

5. Unité membrane-électrodes selon au moins une des revendications 1 à 4, **caractérisée en ce que** le matériau conducteur d'électricité contient du carbone et/ou un métal.

6. Unité membrane-électrodes selon au moins une des revendications 1 à 5, **caractérisée en ce que** l'électrode de diffusion gazeuse contient une à quatre couches de diffusion gazeuse.

7. Unité membrane-électrodes selon au moins une des revendications 1 à 6, **caractérisée en ce que** la couche de diffusion gazeuse contient un matériau de support mécanique stable, imprégné d'un liant, de préférence un polymère stable en température.

8. Unité membrane-électrodes selon la revendication 1, **caractérisée en ce que** la couche catalytique active
a) contient au moins un matériau catalytique actif et
b) un ou plusieurs polymères conducteurs d'ions et/ou
c) un ou plusieurs matériaux hydrophobes.

9. Unité membrane-électrodes selon la revendication 8, **caractérisée en ce que** le matériau catalytique actif est au moins un métal du 8ème groupe auxiliaire ou un alliage d'un ou de plusieurs métaux du 8ème groupe auxiliaire, en particulier avec un métal du 4ème groupe auxiliaire.

10. Unité membrane-électrodes selon la revendication 8 et/ou 9, **caractérisée en ce que** le rapport de masse matériau catalytique actif : polymère conducteur d'ions se situe dans le domaine de 1 : 100 à 100 : 1.

11. Unité membrane-électrodes selon au moins une des revendications 8 à 10, **caractérisée en ce que** la concentration du matériau catalytique actif diminue verticalement par rapport à la couche catalytique en fonction de l'éloignement croissant du matériau de support et **en ce que** la concentration en polymère conducteur d'ions augmente.

12. Unité membrane-électrodes selon au moins une des revendications 1 à 11, **caractérisée en ce que** l'électrode de diffusion gazeuse est renforcée mécaniquement par un réseau de quadrillage conducteur d'électricité.

13. Unité membrane-électrodes selon la revendication 12, **caractérisée en ce que** le réseau de quadrillage conducteur d'électricité est un réseau de quadrillage métallique ou contient un polymère au revêtement métallique.

14. Unité membrane-électrodes selon au moins une des revendications 1 à 13, **caractérisée en ce que** celle-ci comprend une anode, une cathode et une membrane électrolyte polymère disposée entre l'anode et la cathode.

15. Méthode de fabrication d'une unité membrane-électrodes, comprenant une membrane électrolyte polymère et au moins une électrode de diffusion gazeuse selon la revendication 1, **caractérisée en ce que** la méthode comprend les étapes suivantes :
a) Fabrication d'une suspension contenant un matériau conducteur d'électricité et au moins un liquide.
b) Mise à disposition d'une ou plusieurs suspensions ou de solutions résultant d'un liant et d'au moins un liquide.
c) Mélange intensif de la suspension fabriquée à l'étape a) avec au moins une des suspensions fabriquées à l'étape b).
d) Imprégnation d'un matériau de support mécanique stable selon la revendication 1 avec le mélange fabriqué à l'étape c).
e) Séchage du matériau de support imprégné, frittage du matériau de support imprégné à une température d'au moins 200 °C.
g) Association de la couche de diffusion gazeuse à une couche catalytique active et
h) association de l'électrode de diffusion gazeuse à une membrane électrolyte polymère ; ce faisant, le matériau de support mécanique stable présente une masse surfacique de < 150 g/m² et l'électrode de diffusion gazeuse possède une résistance superficielle électrique de ≤ 100 mΩ x cm².

16. Méthode de fabrication d'une unité membrane-électrodes selon la revendication 15, **caractérisée en ce que** le matériau conducteur d'électricité présente une conductibilité en vrac de > 10 ms/cm.

17. Méthode de fabrication d'une unité membrane-électrodes selon au moins une des revendications 15 ou 16, **caractérisée en ce que** l'électrode de diffusion gazeuse contient au moins une couche de diffusion gazeuse dont le matériau de support mécanique stable est un nontissé, du tissu ou du papier.

18. Méthode de fabrication d'une unité membrane-électrodes selon au moins une des revendications 15 à 17, **caractérisée en ce que** les étapes d) et e) ont été répétées une ou plusieurs fois.

19. Méthode de fabrication d'une unité membrane-électrodes selon au moins une des revendications 15 à 18, **caractérisée en ce que** le matériau de support imprégné est fritté à des températures supérieures à 300 °C.

20. Méthode de fabrication d'une unité membrane-électrodes selon au moins une des revendications 15 à 19, **caractérisée en ce qu'**une ou plusieurs couches de diffusion gazeuse frittée(s) sont pressées à une pression maximale de 500 bars et à une température maximale de 400 °C, de préférence à une température maximale de 250 °C.

21. Méthode de fabrication d'une unité membrane-électrodes selon au moins une des revendications 15 à 20, **caractérisée en ce que** la suspension fabriquée à l'étape a) contient un matériau visant à la diminution de la tension superficielle.

22. Méthode de fabrication d'une unité membrane-électrodes selon au moins une des revendications 15 à 21, **caractérisée en ce que** le liant et le matériau conducteur d'électricité sont utilisés dans un rapport de masse de 1 : 100 à 100 : 1.

23. Méthode de fabrication d'une unité membrane-électrodes selon au moins une des revendications 15 à 22, **caractérisée en ce que** le revêtement de la couche de diffusion gazeuse par une couche catalytique active présente les étapes suivantes :
a) Mélange intensif d'au moins un matériau catalytique avec un ou plusieurs polymères conducteurs d'ions dissous ou en suspension.
b) Application de la suspension fabriquée à l'étape a) sur une surface de la couche de diffusion gazeuse.
c) Séchage de la couche appliquée.

24. Méthode de fabrication d'une unité membrane-électrodes selon la revendication 23, **caractérisée en ce qu'**une partie du liquide de suspension est évaporée avant l'application de la suspension fabriquée à l'étape a).

25. Méthode de fabrication d'une unité membrane-électrodes selon au moins une des revendications 23 à 24, **caractérisée en ce que** les étapes b) et c) sont répétées une ou plusieurs fois.

26. Méthode de fabrication d'une unité membrane-électrodes selon au moins une des revendications 23 à 25, **caractérisée en ce que** des suspensions de concentrations différentes sont utilisées sur du matériau catalytique actif et sur du polymère conducteur d'ions en couches successives.

27. Utilisation d'une unité membrane-électrodes selon au moins une des revendications 1 à 14 dans une cellule combustible ou une cellule électrolytique utilisant un électrolyte en polymère.
